**Europäisches Patentamt**

**European Patent Office**

**Office européen des brevets**

(19)

(11) Veröffentlichungsnummer: **0 456 994 A1**

## (12) EUROPÄISCHE PATENTANMELDUNG

(21) Anmeldenummer: **91104490.7**

(22) Anmeldetag: **22.03.91**

(51) Int. Cl.5: **C21B 7/12, E21B 10/42, E21B 10/48**

(30) Priorität: **15.05.90 DE 9005494 U**
**26.10.90 DE 9014836 U**

(43) Veröffentlichungstag der Anmeldung:
**21.11.91 Patentblatt 91/47**

(84) Benannte Vertragsstaaten:
**AT BE DE ES FR GB IT NL**

(71) Anmelder: **WILLI WADER GMBH**
**Justus-von-Liebig-Strasse 3**
**W-5608 Radevormwald 1(DE)**

(72) Erfinder: **Wader, Jochen**
**Vorm Holte 10**
**W-5608 Radevormwald(DE)**

(74) Vertreter: **Patentanwälte Dr. Solf & Zapf**
**Schlossbleiche 20 Postfach 13 01 13**
**W-5600 Wuppertal 1(DE)**

(54) **Bohrstange zum Stichlochbohren an Hochöfen.**

(57) Bohrstange (2) zum Stichlochbohren an Hochöfen, bestehend aus einem Stahlrohr (4) mit einem an einem Ende über Schweißnähte (10) befestigten Bohrkopf (8), wobei der Bohrkopf (8) aus mindestens zwei Stahlprofilabschnitten (14) besteht, die in gleichmäßig über den Umfang des Stahlrohrs (4) verteilter, sich in Richtung der Rohr-Längsachse (16) um einen Überstand (A) über das Stahlrohr (4) hinaus erstreckender Anordnung auf der Umfangsfläche (18) des Stahlrohrs (4) über die Schweißnähte (10) befestigt sind.

FIG.1

Die vorliegende Erfindung betrifft eine Bohrstange zum Stichlochbohren an Hochöfen, bestehend aus einem Stahlrohr mit einem an einem Ende über Schweißnähte befestigten Bohrkopf.

Zum Aufbohren von mit einer Stichlochstopfmasse verschlossenen Hochofen-Stichlöchern ist einerseits eine Bohrstange bekannt, die aus einem Stahlrohr mit auf einer Seite einstückig angeschmiedetem Bohrkopf besteht.

Weiterhin werden auch Bohrstangen mit einem beispielsweise als separates Schmiedeteil ausgebildeten Bohrkopf verwendet, wobei der Bohrkopf an das Stahlrohr angeschraubt oder angeschweißt ist.

Durch das Stahlrohr soll während des Stichlochbohrens Kühlluft zugeführt und hierdurch auch das entstehende Bohrmehl nach außen wegtransportiert werden. Die bekannten Bohrstangen weisen aber den Nachteil auf, daß - bedingt durch die Raumform des Bohrkopfes - nur ein sehr geringer Kühlluftdurchlaß gewährleistet ist, was einerseits zu hohen thermischen Belastungen und andererseits auch zu einem schlechten Abtransport des Bohrmehls führt. Insbesondere bei solchen Bohrstangen, deren Stahlrohr eine geringe Wandstärke aufweist, treten im Stichloch aufgrund der geringen Masse des Stahlrohres besonders hohe thermische Belastungen auf. Diese könnten zwar grundsätzlich durch verstärkten Kühlluftdurchsatz ausgeglichen werden, jedoch scheitert dies an dem begrenzten Luftdurchsatz des Bohrkopfes. Außerdem sind diese bekannten Bohrstangen insbesondere aufgrund des Schmiedevorganges relativ teuer.

Aus dem DE-GM 89 01 643 ist eine weitere Bohrstange bekannt, mit der die beschriebenen Nachteile dadurch beseitigt werden sollen, daß der Bohrkopf mindestens zwei aus Stahlblech bestehende Bohrflügel aufweist, die jeweils aus einem sich von einem etwa mittig vor dem Ende des Stahlrohrs liegenden Bereich radial nach außen erstreckenden Querabschnitt und einem sich an diesen in axialer Richtung anschließenden, mit dem Stahlrohr auf dessen Außenfläche verschweißten Längsabschnitt bestehen. Um hierbei die Zufuhr der Kühlluft zu gewährleisten, sind die Querabschnitte axial von dem Ende des Stahlrohrs beabstandet. Diese bekannte Bohrstange hat sich im wesentlichen sehr gut bewährt. Allerdings ist auch diese bekannte Bohrstange noch relativ teuer in der Herstellung, und zwar im Hinblick darauf, daß derartige Bohrstangen in der Regel nur einmal zu verwenden sind. Dies liegt im wesentlichen daran, daß der Bohrkopf "vorgefertigt" werden muß, indem die Bohrflügel im Bereich der Querabschnitte miteinander derart verschweißt werden, daß die Längsabschnitte der Bohrflügel mit ihren dem Stahlrohr zugekehrten Innenflächen auf einer gedachten Querschnittsform liegen, die etwa dem Außenquerschnitt des Stahlrohrs entspricht. Nachfolgend wird der Bohrkopf axial auf das Stahlrohr aufgesteckt und dann mit dem Stahlrohr im Bereich der Längsabschnitte verschweißt. Auch hinsichtlich des Kühlluftdurchsatzes ist diese bekannte Bohrstange noch verbesserungsbedürftig, da die Querabschnitte genau vor der Mündung des Luftkanals des Stahlrohrs liegen.

Der Erfindung liegt daher die Aufgabe zugrunde, ausgehend von dem beschriebenen Stand der Technik eine Bohrstange zu schaffen, die bei guten Bohreigenschaften besonders einfach und preiswert in der Herstellung ist.

Erfindungsgemäß wird dies dadurch erreicht, daß der Bohrkopf aus mindestens zwei Stahlprofilabschnitten besteht, die in gleichmäßig über den Umfang des Stahlrohrs verteilter, sich in Richtung der Rohrlängsachse um einen Überstand über das Stahlrohr hinaus erstreckender Anordnung auf der Umfangsfläche des Stahlrohrs über die Schweißnähte befestigt sind. Durch diese vorteilhafte Ausgestaltung erübrigt sich eine aufwendige Vorfertigung des Bohrkopfes; die einzelnen Stahlprofilabschnitte werden unmittelbar in der erfindungsgemäßen Anordnung an das Stahlrohr angeschweißt.

Besonders vorteilhaft ist es, wenn es sich bei den Stahlprofilabschnitten um Mehrkantprofile, und zwar insbesondere mit rechteckigem oder quadratischem Querschnitt, handelt, jedoch können erfindungsgemäß auch Rundstahlprofile eingesetzt werden. An ihren vorderen, sich über das Stahlrohr hinaus erstreckenden Enden besitzen die Stahlprofilabschnitte erfindungsgemäß ebene, senkrecht zur Rohr-Längsachse angeordnete Endflächen. Auch dies trägt zu einer Reduzierung der Herstellungskosten insofern bei, als die Stahlprofilabschnitte in besonders einfacher Weise von Endlosprofilstangen abgeschnitten werden können.

Obwohl der aus den Stahlprofilabschnitten gebildete Bohrkopf somit in seinem mittigen Bereich keinerlei Schneid- oder Bohrelemente, sondern ausschließlich die sich bei Rotation der Bohrstange auf einem Kreis bewegenden Stahlprofilabschnitte aufweist, hat sich überraschenderweise gezeigt, daß die erfindungsgemäße Bohrstange außerordentlich gute Bohreigenschaften besitzt. Dabei wird ein besonders hoher Kühlluftdurchsatz erreicht, da der Luftkanal des Stahlrohrs nach vorne hin völlig offen ist, d.h. die Luftzufuhr wird vorteilhafterweise durch den erfindungsgemäßen Bohrkopf in keiner Weise beeinträchtigt.

Weitere vorteilhafte Ausgestaltungsmerkmale der Erfindung sind in den Unteransprüchen sowie der folgenden Beschreibung enthalten.

Anhand der Zeichnungen soll im folgenden ein Ausführungsbeispiel der Erfindung näher erläutert werden. Dabei zeigen:

Fig. 1     eine gekürzt dargestellte Seitenansicht einer erfindungsgemäßen Bohrstange
und

Fig. 2    eine stirnseitige Ansicht der Bohrstange auf den Bohrkopf in Pfeilrichtung II gemäß Fig. 1.

Fig. 3    eine Frontansicht auf eine weitere Ausführungsform der erfindungsgemäßen Bohrstange,

Fig. 4    eine Teilansicht eines Schnitts entlang der Schnittlinie IV-IV in Fig. 3.

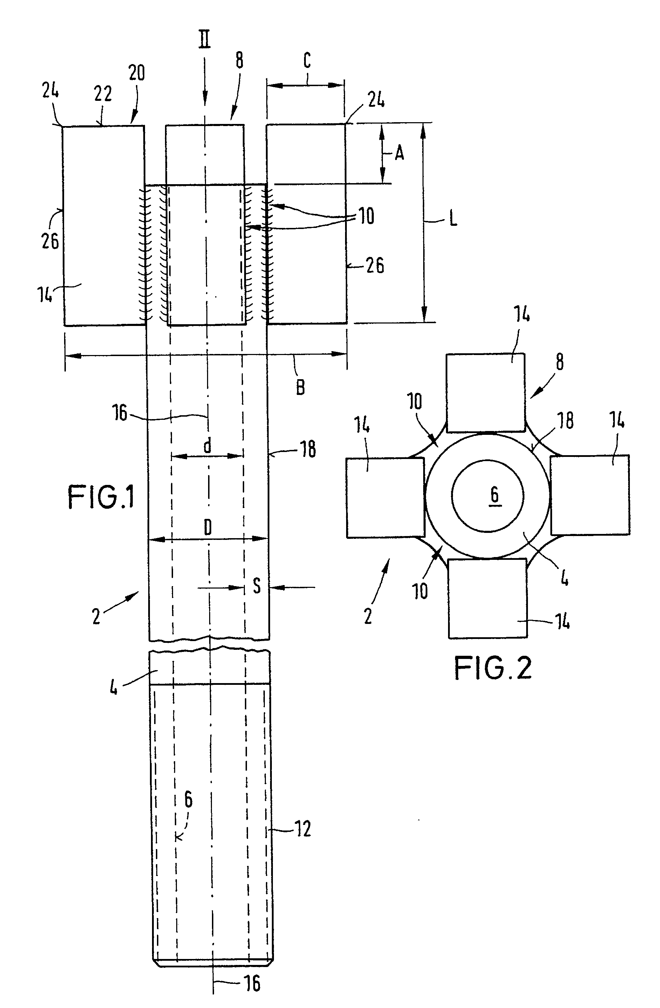

Gemäß Fig. 1 besteht eine erfindungsgemäße Bohrstange 2 aus einem Stahlrohr 4, welches im dargestellten Beispiel im Querschnitt kreisförmig mit einem Außendurchmesser D, einem Innendurchmesser d und einer Wandstärke S ausgebildet ist. Durch das Stahlrohr 4 erstreckt sich folglich ein axialer Kanal 6 zum Zuführen von Kühlluft.

An einem Ende des Stahlrohrs 4 ist ein Bohrkopf 8 angeschweißt, d.h. über Schweißnähte 10, die in Fig. 1 lediglich schraffiert angedeutet sind, befestigt. An seinem dem Bohrkopf 8 gegenüberliegenden Ende, weist das Stahlrohr 4 im dargestellten Beispiel ein Außengewinde 12 auf, mit dem die Bohrstange 2 in eine nicht dargestellte Stichlochbohrmaschine eingesetzt werden kann. Anstelle eines Gewindes kann jedoch auch eine passende Ausfräsung oder dergleichen Maschinenanschluß zum Einsetzen in die Stichlochbohrmaschine vorgesehen sein. Über die Stichlochbohrmaschine wird die Bohrstange 2 in eine Dreh-/Schlagbewegung versetzt, wodurch die Stichlochstopfmasse beim Bohren mehr zertrümmert als zerschnitten wird.

Erfindungsgemäß besteht nun der Bohrkopf 8 aus mindestens zwei einzelnen Stahlprofilabschnitten 14, die jeweils über die Schweißnähte 10 an der Umfangsfläche des Stahlrohrs 4 befestigt sind. Dabei sind die Stahlprofilabschnitte 14 gleichmäßig über den Umfang des Stahlrohrs 4 verteilt angeordnet und erstrecken sich in Richtung der Rohr-Längsachse 16 um einen Überstand A über das Stahlrohr 4 hinaus nach vorne. Dieser Überstand A gewährleistet einen außerordentlich großen Kühlluftdurchsatz.

Wie insbesondere in Fig. 2 zu erkennen ist, erstrecken sich die Stahlprofilabschnitte 14 sternförmig von der Umfangsfläche 18 des Stahlrohrs 4 radial nach außen. Der Luftkanal 6 ist damit nach vorne vollständig offen.

Im dargestellten Ausführungsbeispiel der Erfindung besteht der Bohrkopf 8 aus vier jeweils um 90° zueinander versetzt angeordneten Stahlprofilabschnitten 14. In Abhängigkeit von dem gewünschten Außendurchmesser B des Bohrkopfes 8 können jedoch auch weniger oder mehr Stahlprofilabschnitte vorgesehen sein. Bei kleinem Durchmesser B werden mehrere, beispielsweise fünf oder sechs "dünnere" Stahlprofilabschnitte 14 verwendet. Bei großem Durchmesser B werden nur zwei oder drei "dickere" Stahlprofilabschnitte 14 an dem Stahlrohr 4 befestigt.

Gemäß Fig. 2 weisen die Stahlprofilabschnitte 14 im dargestellten Ausführungsbeispiel einen quadratischen Querschnitt auf (Vierkantstahl). Es liegt aber im Bereich der Erfindung, beliebige Mehrkantprofile oder auch Rundstahlprofile mit kreisförmigem Querschnitt (Rundstahl) zu verwenden.

An ihren vorderen, sich über das Stahlrohr 4 hinaus erstreckenden Enden 20 besitzen die Stahlprofilabschnitte 14 ebene, senkrecht zur Rohr-Längsachse 16 angeordnete Endflächen 22. Hierdurch sind äußere Schneidkanten 24 zwischen den ebenen Endflächen 22 und den äußeren, in axialer Richtung verlaufenden Längskanten bzw. Längsflächen 26 ausgebildet.

In der Praxis wird die erfindungsgemäße Bohrstange 2 mit folgenden Abmessungen hergestellt. Das Stahlrohr 4 weist einen Außendurchmesser D von 30 mm bis 45 mm und eine Wandstärke S von 5 mm bis 12 mm auf. Der Überstand A zwischen dem Ende des Stahlrohrs 4 und den vorderen Enden 20 der Stahlprofilabschnitte 14 beträgt 5 mm bis 30 mm. Die Stahlprofilabschnitte 14 weisen in zu dem Stahlrohr 4 radialer Richtung eine Dicke C von 5 mm bis 25 mm auf. Ferner besitzen die Stahlprofilabschnitte 14 eine axiale Länge L von 30 mm bis 100 mm. Hierdurch wird eine außerordentlich gute Führung des Bohrkopfes 8 in dem Bohrloch erreicht.

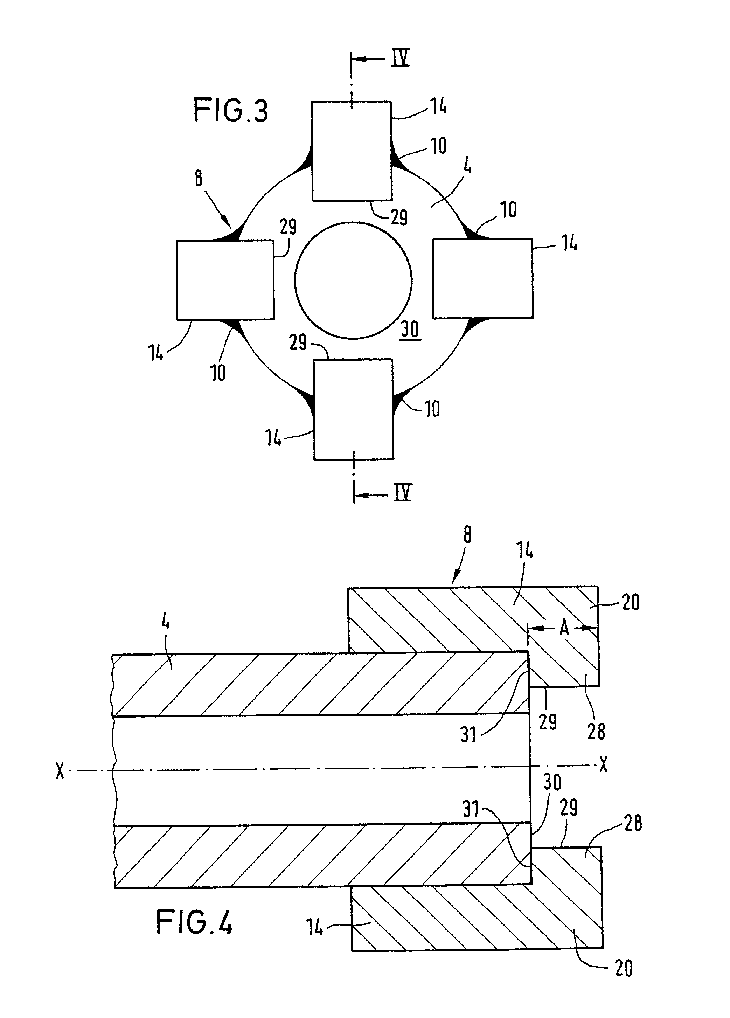

In Fig. 3 ist eine weitere Ausführungsform einer erfindungsgemäßen Bohrstange 2 dargestellt. Hierbei sind gleiche Teile wie in den Figuren 1 und 2 mit denselben Bezugsziffern versehen. Die Stahlprofilabschnitte 14 des Bohrkopfes 8 sind hierbei zweckmäßigerweise derart ausgestaltet, daß sie einen radial in Richtung auf die Bohrstangenlängsachse X-X sich erstreckenden Absatz 28 aufweisen. Hierdurch liegen die Innenflächen 29 der Profilabschnitte 14 im Bereich der Stirnfläche 30 des Stahlrohres 4, d.h. daß die unteren Innenflächen 29 der sich mit dem Überstand A über das Stahlrohr 4 hinaus erstreckenden Enden 20 auf einem Kreis um die Stahlrohr-Längsachse X-X liegen, dessen Radius kleiner ist als der Außenradius des Stahlrohrs 4. Zweckmäßigerweise liegen die Absätze 28 mit ihrer inneren radialen Stufenfläche 31 an der Stirnfläche 30 an. Durch diese erfindungsgemäße Ausführungsform sind die sich über das Stahlrohr 4 hinaus erstreckenden Enden 20 der Stahlprofilabschnitte 14 querschnittsmäßig vergrößert, was insbesondere bei kleineren Bohrkopfdurchmessern wesentlich ist, da hierdurch eine Verstärkung der Stahlprofilabschnitte erreicht wird. Die Profilabschnitte 14 können durch Zerspanen oder spanlose Formgebung mit den Absätzen 28 hergestellt werden. Hierbei ist es insbesondere möglich, die Stahlprofilabschnitte 14 mit den Absätzen durch Gesenkschmieden oder Gießen spanlos in der endgültig benötigten Form zu fertigen.

Wie sich insbesondere aus Fig. 3 ergibt, sind die Profilabschnitte 14 durch Schweißen mittels der Schweißnähte 10 mit dem Stahlrohr 4 verbunden.

Eine weitere, nicht dargestellte Ausführungsform kann auch darin bestehen, daß Stahlprofilabschnitte 14, wie in den Figuren 1 und 2 dargestellt, in Längsnuten der Bohrstange eingesetzt und mit der Bohrstange verschweißt sind. Auch hierdurch wird erreicht, daß eine Querschnittsvergrößerung der sich über das Stahlrohr 4 hinaus erstreckenden Enden 20 der Stahlprofilabschnitte 14 im Überstandsbereich vorhanden ist.

Die vorliegende Erfindung ist nicht auf die beschriebenen Ausführungsbeispiele beschränkt, sondern umfaßt auch alle im Sinne der Erfindung gleichwirkenden Ausführungsformen.

**Patentansprüche**

1. Bohrstange zum Stichlochbohren an Hochöfen, bestehend aus einem Stahlrohr mit einem an einem Ende über - Schweißnähte befestigten Bohrkopf,
dadurch gekennzeichnet, daß der Bohrkopf (8) aus mindestens zwei Stahlprofilabschnitten (14) besteht, die in gleichmäßig über den Umfang des Stahlrohrs (4) verteilter, sich in Richtung der Rohr-Längsachse (16) um einen Überstand (A) über das Stahlrohr (4) hinaus erstreckender Anordnung auf der Umfangsfläche (18) des Stahlrohrs (4) über die Schweißnähte (10) befestigt sind.

2. Bohrstange nach Anspruch 1,
dadurch gekennzeichnet, daß der Bohrkopf (8) aus drei bis zwölf Stahlprofilabschnitten (14) besteht.

3. Bohrstange nach Anspruch 1 oder 2,
dadurch gekennzeichnet, daß die Stahlprofilabschnitte (14) als insbesondere symmetrische Mehrkantprofile ausgebildet sind.

4. Bohrstange nach einem oder mehreren der Ansprüche 1 bis 3,
dadurch gekennzeichnet, daß die unteren Innenflächen (29) der sich mit dem Überstand (A) über das Stahlrohr (4) hinaus erstreckende Enden (20) auf einen Kreis um die Stahlrohr-Längsachse (X-X) liegen, dessen Radius kleiner ist als der Außenradius des Stahlrohres (4).

5. Bohrstange nach Anspruch 4,
dadurch gekennzeichnet, daß die Stahlprofilabschnitte (14) im Bereich des Überstandes (A) einen sich radial in Richtung auf die Längsachse (X-X) erstreckenden Absatz (28) aufweisen.

6. Bohrstange nach Anspruch 5,
dadurch gekennzeichnet, daß der Absatz (28) mit seiner inneren, radialen Stufenfläche (31) an der Stirnfläche (30) des Stahlrohres (4) anliegt.

7. Bohrstange nach einem der Ansprüche 4 bis 6,
dadurch gekennzeichnet, daß die Stahlprofilabschnitte (14) gesenkgeschmiedet, gegossen oder durch spanende Verformung hergestellt sind.

8. Bohrstange nach einem oder mehreren der Ansprüche 1 bis 7,
dadurch gekennzeichnet, daß die Stahlprofilabschnitte (14) einen rechteckigen, vorzugsweise quadratischen Querschnitt aufweisen.

9. Bohrstange nach einem oder mehreren der Ansprüche 1 bis 7,
dadurch gekennzeichnet, daß die Stahlprofilabschnitte (14) einen kreisförmigen Querschnitt aufweisen.

10. Bohrstange nach einem oder mehreren der Ansprüche 1 bis 9,
dadurch gekennzeichnet, daß die Stahlprofilabschnitte (14) an ihren vorderen, sich über das Stahlrohr (4) hinaus erstreckenden Enden (20) ebene, insbesondere senkrecht zur Rohr-Längsachse (16) angeordnete Endflächen (22) aufweisen.

11. Bohrstange nach einem oder mehreren der Ansprüche 1 bis 10,
dadurch gekennzeichnet, daß der Überstand (A) zwischen dem Ende des Stahlrohrs (4) und den vorderen Enden (20) der Stahlprofilabschnitte (14) 5 mm bis 30 mm beträgt.

12. Bohrstange nach einem oder mehreren der Ansprüche 1 bis 11,
dadurch gekennzeichnet, daß das Stahlrohr (4) einen Außendurchmesser (D) von 30 mm bis 45 mm sowie vorzugsweise eine Wandstärke (S) von 5 mm bis 12 mm aufweist.

13. Bohrstange nach einem oder mehreren der Ansprüche 1 bis 12,
dadurch gekennzeichnet, daß die Stahlprofilabschnitte (14) in zu dem Stahlrohr (4) radialer Richtung einer Dicke (C) von 5 mm bis 25 mm aufweisen.

14. Bohrstange nach einem oder mehreren der Ansprüche 1 bis 13,
**dadurch gekennzeichnet,** daß die Stahlprofilabschnitte (14) eine axiale Länge (L) von 30 mm bis 100 mm aufweisen.

FIG.1

FIG.2

FIG.3

FIG.4

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | BE-A-8 951 16  (R. VAN DEN BERGHE) | | C 21 B 7/12 |
| | – – – | | E 21 B 10/42 |
| A | GB-A-2 187 774  (SOLETANCHE) | | E 21 B 10/48 |
| | – – – | | |
| A | US-A-3 127 945  (H.C. BRIDWELL) | | |
| | – – – | | |
| A,D | DE-U-8 901 643  (WILLI WADER GmbH) | | |
| | – – – | | |
| A | EP-A-0 351 699  (HILTI) | | |
| | – – – | | |
| A | US-A-4 681 174  (M.T. AUBAKIROV) | | |
| | – – – | | |
| A | FR-C-3 325 41  (A. TINDEL) | | |
| | – – – – – | | |

| | RECHERCHIERTE SACHGEBIETE (Int. Cl.5) |
|---|---|
| | C 21 B |
| | E 21 B |
| | F 27 D |

Der vorliegende Recherchenbericht wurde für alle Patentansprüche erstellt

| Recherchenort | Abschlußdatum der Recherche | Prüfer |
|---|---|---|
| Den Haag | 12 August 91 | ELSEN D.B.A. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
----------------------------------------------------------------
& : Mitglied der gleichen Patentfamilie, übereinstimmendes Dokument